# EUROPEAN PATENT SPECIFICATION

(11) **EP 4 306 783 B1**
(45) Date of publication and mention of the grant of the patent: **29.04.2026**
(21) Application number: 23185398.7
(22) Date of filing: 13.07.2023
(51) Int. Cl.: F02C 3/22

(54) **AIRCRAFT POWER PLANT WITH HYDROGEN TURBO-EXPANDER**
FLUGZEUGKRAFTWERK MIT WASSERSTOFF-TURBOEXPANDER
MOTEUR DE PUISSANCE D'AÉRONEF AVEC TURBO-DÉTENDEUR D'HYDROGÈNE

(30) Priority: 14.07.2022 US 202217864851
(43) Date of publication of application: 17.01.2024
(73) Proprietor: PRATT & WHITNEY CANADA CORP., Longueuil, Québec J4G 1A1 (CA)
(72) Inventor: LABRECQUE, Michel, (01BE5) Longueuil, J4G 1A1 (CA); NGUYEN, Kevin, (01BE5) Longueuil, J4G 1A1 (CA)
(74) Representative: Dehns

(56) References cited:
- EP-A1- 3 848 566
- US-A1- 2021 332 759

## Description

### TECHNICAL FIELD

The disclosure relates generally to aircraft power plants, and more particularly to aircraft power plants powered with hydrogen.

### BACKGROUND

In an aircraft engine, a carbon-based fuel is typically mixed with air in a combustion chamber and ignited to generate a stream of high-energy exhaust gas. The exhaust gas includes carbon that is eventually released into the environment. Reducing carbon emissions from aircraft engines is desirable.

EP 3848566 A1 relates to a propulsion system including an engine including a combustion chamber, a solid fuel storage system including one or more metal hydride compound segments, a heating system operable to apply heat to the one or more metal hydride compound segments to desorb gaseous hydrogen fuel from the one or more metal hydride compound segments and a piping system configured to direct the gaseous hydrogen fuel to the combustion chamber of the engine. The combustion chamber of EP 3848566 A1 is receptive of the gaseous hydrogen fuel and is configured to combust the gaseous hydrogen fuel to drive an operation of the engine.

### SUMMARY

According to one aspect of the invention, there is provided a method of operating an aircraft power plant. The method comprises:
driving a load onboard an aircraft with a combustion engine;
heating a solid metal hydride onboard the aircraft to cause hydrogen gas to be released from the solid metal hydride;
expanding the hydrogen gas through a turbo-expander to produce work; and
using the work produced by the turbo-expander to drive the load.

In an embodiment of the above the method comprises compressing the hydrogen gas released from the solid metal hydride before expanding the hydrogen gas through the turbo-expander.

In an embodiment of any of the above, driving the load with the combustion engine includes burning a fuel other than the hydrogen gas in a combustion chamber of the combustion engine.

In an embodiment of any of the above the method comprises, after expanding the hydrogen gas through the turbo-expander, burning the hydrogen gas in the combustion chamber of the combustion engine.

In an embodiment of any of the above the method comprises, after expanding the hydrogen gas through the turbo-expander, releasing the hydrogen gas into the atmosphere.

In an embodiment of any of the above, the combustion engine includes a gas turbine engine including a compressor; and the load includes the compressor drivingly coupled to the turbo-expander.

In an embodiment of any of the above, driving the load with the combustion engine includes burning a fuel other than the hydrogen gas in a combustion chamber of the gas turbine engine; and after expanding the hydrogen gas through the turbo-expander, burning the hydrogen gas in the combustion chamber of the gas turbine engine.

In an embodiment of any of the above, the load includes an electric generator.

In an embodiment of any of the above the method comprises transferring the work produced by the turbo-expander to the load via an accessory gearbox drivingly coupled to the combustion engine.

In an embodiment of any of the above the method comprises, transferring heat from the combustion engine to the solid metal hydride.

According to another aspect of the invention, there is provided a system for driving a load onboard an aircraft. The system comprises:
a solid metal hydride;
a source of heat in thermal communication with the solid metal hydride to cause hydrogen gas to be released from the solid metal hydride;
a turbo-expander in fluid communication with the solid metal hydride to produce work from the hydrogen gas released from the solid metal hydride expanding through the turbo-expander;
a first mechanical connection transferring the work produced by the turbo-expander to the load; and
a second mechanical connection transferring work produced by a combustion engine to the load.

In an embodiment of the above, the system comprises a pump operatively disposed between the solid metal hydride and the turbo-expander to pressurize the hydrogen gas released from the solid metal hydride upstream of the turbo-expander.

In an embodiment of any of the above, the system comprises a conduit conveying the hydrogen gas from the turbo-expander to a combustion chamber of the combustion engine.

In an embodiment of any of the above, the system comprises a conduit conveying the hydrogen gas from the turbo-expander to the atmosphere.

According to a further aspect of the invention, an aircraft power plant comprises the system as defined in any of the embodiments, and/or the aspect, above.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a schematic illustration of an aircraft including an exemplary aircraft power plant as described herein;
FIG. 2 is a schematic illustration of another exemplary aircraft power plant;
FIG. 3 is a schematic illustration of another exemplary aircraft power plant;
FIG. 4 is a schematic illustration of another exemplary aircraft power plant; and
FIG. 5 is a flow diagram of a method of operating an aircraft power plant.

### DETAILED DESCRIPTION

The following disclosure relates to aircraft power plants and associated methods. In various embodiments, the aircraft power plants described herein may be partially powered with hydrogen in some situations. In some embodiments, the aircraft power plants and method described herein may promote a reduction in carbon emission in some situations. In some embodiments, the aircraft power plants described herein may produce work from the expansion of hydrogen gas released from a solid metal hydride through a turbo-expander. The work produced from the expansion of the hydrogen gas through the turbo-expander may be used to mechanically drive one or more loads onboard an aircraft.

The terms "connected" and "coupled to" may include both direct connection and coupling (in which two elements that are coupled to each other contact each other) and indirect connection and coupling (in which at least one additional element is located between the two elements). The term "substantially" as used herein may be applied to modify any quantitative representation which could permissibly vary without resulting in a change in the basic function to which it is related.

Aspects of various embodiments are described through reference to the drawings.

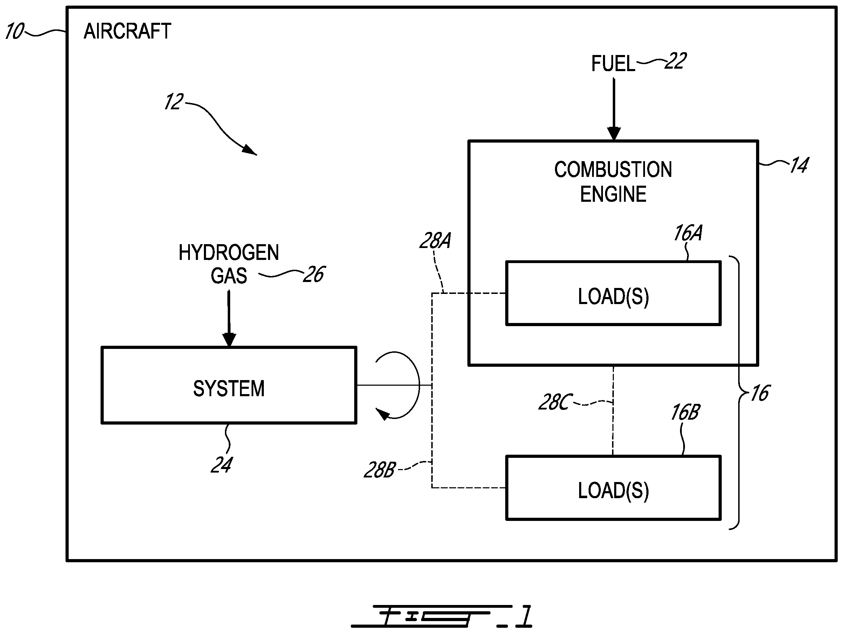

FIG. 1 is a schematic illustration of aircraft 10 including aircraft power plant 12 (referred hereinafter as "power plant 12") as described herein. Aircraft 10 may be any type of manned or unmanned aircraft (e.g., drone) such as corporate, private, commercial and passenger aircraft. Aircraft 10 may be a fixed-wing aircraft or a rotary-wing aircraft (e.g., helicopter) including one or more power plants 12. In some embodiments, power plant 12 may be configured to produce work used for the propulsion of aircraft 10 and may be operated during flight of aircraft 10. For example, power plant 12 may be configured to produce thrust to propel aircraft 10. For example, power plant 12 may be drivingly coupled to a propeller of a fixed-wing aircraft, or to a main rotor of a helicopter.

In some embodiments, power plant 12 may be configured as an auxiliary power unit (APU) that produces work for functions other than propulsion of aircraft 10. For example, power plant 12 may produce electricity and/or pressurized air for use by one or more systems of aircraft 10. In an APU configuration, power plant 12 may mainly be operated to power systems of aircraft 10 when aircraft 10 is on the ground and main engines used for propelling aircraft 10 are turned off. In an APU configuration, power plant 12 may be installed in a tail cone or other suitable location within aircraft 10.

Power plant 12 may include one or more combustion engines 14 (referred hereinafter in the singular) drivingly coupled to one or more loads 16 onboard of aircraft 10. In various embodiments, combustion engine 14 may include a continuous combustion engine. For example, combustion engine 14 may include a gas turbine engine in a turbofan configuration, turboprop configuration, or turboshaft configuration. In some embodiments, combustion engine 14 may include an intermittent combustion engine. For example, combustion engine 14 may include a reciprocating piston engine, or a rotary (e.g., Wankel) engine.

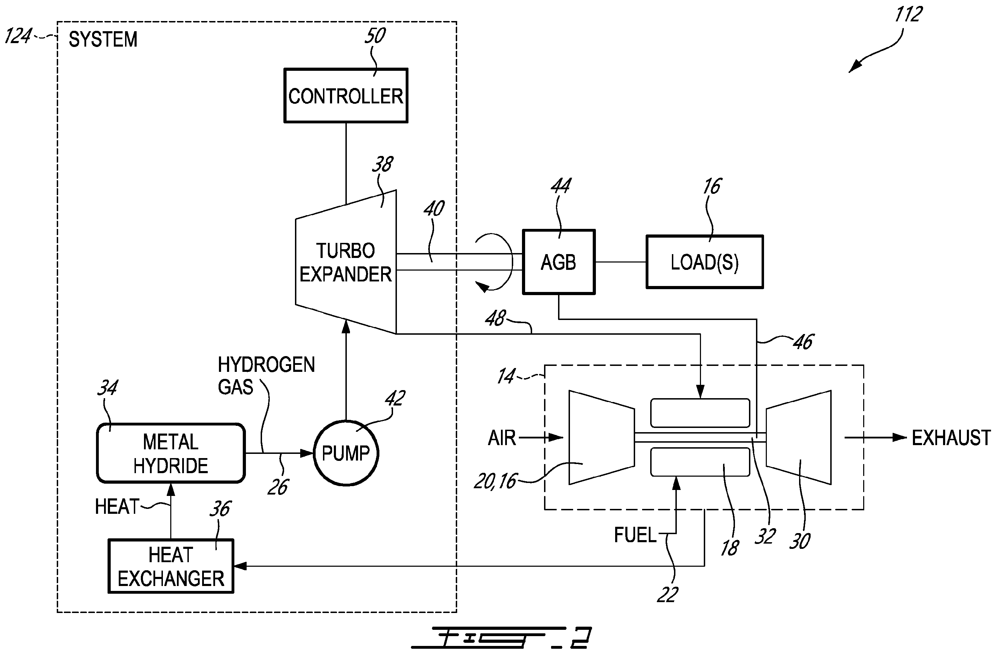

Combustion engine 14 may be configured to drive one or more internal loads 16A that are considered part of (e.g., internal to) combustion engine 14, and/or one or more external loads 16B that are external to combustion engine 14. Internal loads 16A may be loads that perform functions associated with sustaining the operation of combustion engine 14. For example, internal loads 16A may include: a compressor supplying air to combustion chamber 18 (shown in FIG. 2) of combustion engine 14; a fuel pump supplying fuel to combustion chamber 18 of combustion engine 14; an oil pump supplying oil to one or more lubrication loads of combustion engine 14; and/or one or more electric generators supplying electricity to a control system of combustion engine 14.

External loads 16B may be loads that perform functions for purposes other than sustaining the operation of combustion engine 14. For example, external loads 16B may include: a load compressor supplying air to an environmental control system (ECS) and/or to a anti-icing system of aircraft 10; an electric generator supplying electricity to a lighting or other system of aircraft 10; a propeller or fan for propelling aircraft 10; and/or a main rotor of a helicopter.

Some loads 16 may be considered both internal and external to combustion engine 14. For example, compressor 20 (shown in FIG. 2) of combustion engine 14 may supply some compressed air for sustaining the operation of combustion engine 14, and also supply some compressed air for supplying an ECS of aircraft 10 via a suitable bleed port. Similarly, an electric generator driven by combustion engine 14 may supply electricity to both a control system of combustion engine 14, and to a lighting system of aircraft 10.

During operation, combustion engine 14 may burn fuel 22 to produce work and use the work to drive one or more loads 16. Fuel 22 may be a carbon-based (e.g., hydrocarbon) fuel stored in liquid form onboard of aircraft 10. In various embodiments, fuel 22 may be a kerosene-type jet fuel, a naphtha-type jet fuel, or a gasoline for example.

Aircraft 10 may also include system 24 for producing work from hydrogen gas 26 and use the work to drive one or more loads 16. System 24 may be an energy conversion system that can produce work from hydrogen gas 26. In some embodiments, combustion engine 14 and system 24 may be operable concurrently to drive load(s) 16. In some embodiments, combustion engine 14 may be operable continuously and be considered a primary source of power for driving load(s) 16. In some embodiments, system 24 may be continuously operable, or be selectively operable on an on-demand basis to supplement the power produced by combustion engine 14 when needed. For example, when the power demand from power plant 12 is relatively high, system 24 may be activated to provide a boost of power and assist combustion engine 14 with meeting the high power demand. In some embodiments, the availability of system 24 to assist combustion engine 14 may permit combustion engine 14 to be sized for efficient operation at a nominal (e.g., average, cruise) power output level while relying on system 24 to meet peak power demands from power plant 12 when necessary.

In some embodiments, the same one or more loads 16 may be driveable simultaneously by both combustion engine 14 and system 24 in some situations. In some embodiments, one or more loads 16 may be driveable by combustion engine 14 while another one or more loads 16 may be driveable by system 24 in some situations.

System 24 may use hydrogen gas 26 to produce motive power in the form of a rotation of a shaft. Such motive power may be transferred to internal load(s) 16A via one or more first mechanical connections 28A, and/or to external load(s) 16B via one or more second mechanical connections 28B. Load(s) 16 may also be drivingly coupled to combustion engine 14 via one or more third mechanical connections 28C. Mechanical connections 28A, 28B, 28C may include suitable mechanical couplings used to connect rotatable shafts of system 24 and of combustion engine 14 to mechanically driven pieces of equipment. In other words, mechanical connections 28A, 28B, 28C may permit torque transfer between shafts of system 24 and of combustion engine 14 to load(s) 16. In some embodiments, mechanical connections 28A, 28B, 28C may include shafts and suitable speed-augmenting and/or speed-reducing gear trains. In some embodiments where load(s) 16 is/are simultaneously driven by both combustion engine 14 and system 24, some mechanical connections 28A, 28B, 28C may be established via a suitable epicyclic (e.g., differential) gear train having two inputs respectively drivingly coupled to system 24 and combustion engine 14, and one output drivingly coupled to the applicable load(s) 16. In some embodiments, a differential gear train may accommodate asymmetric inputs (e.g., torques, rotational speeds) from system 24 and combustion engine 14. In some embodiments, some of mechanical connections 28A, 28B, 28C may include a clutch to selectively connect and disconnect system 24 and/or combustion engine 14 to/from applicable load(s) 16.

FIG. 2 is a schematic illustration of an exemplary aircraft power plant 112 of aircraft 10. Power plant 112 may include system 124 for producing work from hydrogen gas 26 and using the work to drive load(s) 16 onboard of aircraft 10. Power plant 112 may include components previously described above in relation to power plant 12. Like elements are identified using like reference numerals. Power plant 112 may include combustion engine 14 having the form of a gas turbine engine as an example. Combustion engine 14 may include: multistage compressor 20 for pressurizing ambient air received into combustion engine 14; combustion chamber 18 in which the compressed air is mixed with fuel 22 and ignited for generating a stream of hot combustion gas, and turbine section 30 for extracting energy from the combustion gases and driving turbine shaft 32.

Combustion engine 14 may be suitable for generating thrust for propelling aircraft 10, or may be suitable for use as an APU of aircraft 10. Combustion engine 14 may be a single-spool gas turbine engine or a multi-spool gas turbine engine. For example, one or more stages of compressor 20 may be drivingly coupled to one or more stages of turbine section 30 via turbine shaft 32. The one or more stages of compressor 20, turbine shaft 32, and the one or more stages of turbine section 30 may define a spool of combustion engine 14 rotating as a unit.

System 124 may include solid metal hydride 34 (referred hereinafter as "MH 34") stored in a suitable tank (e.g., canister, cartridge) onboard of aircraft 10. MH 34 may also be referred to as an interstitial hydride and may include any suitable type of solid hydrogen storage material including metal or metalloid bonded to hydrogen. MH 34 may include hydrogen stored on the surface of a solid by adsorption. Non-limiting examples of materials for MH 34 may include a lanthanum-nickel alloy (LaNi₅H₆), aluminum hydride (AlH₃), magnesium hydride (MgH₂), sodium aluminum hydride (NaAlH₄), and ammonia borane (NH₃BH₃). MH 34 may be in a powder form and may be stored in a pressurized tank. In some embodiments, the storage of hydrogen as a solid in the form of MH 34 may provide a relatively high power density, promote efficient utilization of space onboard of aircraft 10, and hence promote compact packaging of power plant 112.

MH 34 may be stored at a suitable pressure and temperature at which the hydrogen substantially remains adsorbed into MH 34. The storage pressure and temperature may depend on the type of MH 34 used. In some embodiments, MH 34 may be stored at a pressure of about 1 MPa. In some embodiments, MH 34 may be stored at a temperature between 0 °C and 50 °C for example. In some embodiments, active cooling of MH 34 using cooling ambient air, a cryogenic liquid or other heat transfer fluid may be required to substantially prevent hydrogen gas 26 from being released from MH 34 when hydrogen gas 26 is not required.

Heat may be applied to MH 34 to cause useable hydrogen gas 26 to be released from MH 34 by desorption when hydrogen gas 26 is needed. A suitable heat source onboard of aircraft 10 may be selectively placed in thermal communication with MH 34 via heat exchanger 36 in order to cause hydrogen gas 26 to be released from MH 34 when system 124 is to be activated. The source of heat may be combustion engine 14. For example, waste heat from combustion engine 14 may be transferred to MH 34 by way of a suitable heat transfer fluid such as exhaust gas, oil from a lubrication system of combustion engine 14, or compressed air bled from compressor 20 of combustion engine 14. Heat exchanger 36 may include one or more conduits in thermal communication (e.g., in contact) with MH 34 for conveying the heat transfer fluid and facilitating heat transfer from the heat transfer fluid to MH 34. Such conduit(s) may be coiled within a (e.g., cylindrical) tank storing MH 34 to increase a length of such conduit(s) and increase an effective heat transfer area. In some embodiments, such conduit(s) may include transverse fins, longitudinal fins, and/or dendritic fins to increase the effective heat transfer area and promote heat transfer.

In some embodiments, a suitable heat source may include one or more electric resistance heating elements in thermal communication with MH 34. For example, an electric heating film or blanket may overlay an outer surface of MH 34 and be activated as needed to heat MH 34 and cause hydrogen gas 26 to be released. The heating film or blanket may be perforated to permit the passage of hydrogen gas 26 therethrough as hydrogen gas 26 is being released from MH 34. The temperature at which MH 34 should be heated to release hydrogen gas 26 may depend on the type of MH 34 used. In some embodiments, MH 34 may be heated to between 150 °C and 200 °C to cause the release of hydrogen gas 26 for example.

Hydrogen gas 26 released from MH 34 may be conveyed to turbo-expander 38 (i.e., expansion turbine) and permitted to expand through turbo-expander 38. In other words, turbo-expander 38 may be in fluid communication with MH 34 via a suitable conduit. Turbo-expander 38 may be a centrifugal-flow or axial-flow turbine through which pressurized hydrogen gas 26 is expanded to produce work to drive load(s) 16. The work produced by turbo-expander 38 may be in the form of rotation of output shaft 40 drivingly coupled to turbo-expander 38.

In some embodiments, the pressure of hydrogen gas 26 released from MH 34 may be increased via pump 42 upstream of turbo-expander 38. The use of pump 42 to increase the pressure of hydrogen gas 26 may increase the potential pressure differential of hydrogen gas 26 across turbo-expander 38 and thereby potentially increase the amount of work that can be produced by turbo-expander 38. In some embodiments, pump 42 may be a centrifugal pump and may be operatively disposed between MH 34 and turbo-expander 38. Pump 42 may be driven by an electric motor or by motive power produced by combustion engine 14 for example.

Output shaft 40 may be drivingly connected to load(s) 16. In some embodiments, load(s) 16 may include one or more mechanically-driven accessories such as a gearbox, an electric generator, a fuel pump, an oil pump, a compressor, and/or other mechanically-driven device associated with a system of aircraft 10, and drivingly coupled to accessory gearbox 44 (referred hereinafter as "AGB 44"). ABG 44 may be drivingly coupled to turbine shaft 32 via tower shaft 46. AGB 44 may include one or more pads/interfaces to which respective accessories may be drivingly coupled. When combustion engine 14 is operated, such accessories (i.e., load(s) 16) may be driven by combustion engine 14 via AGB 44, tower shaft 46 and turbine shaft 32. In other words, tower shaft 46 and AGB 44 may define a mechanical connection between turbine shaft 32 and load(s) 16 to transfer work produced by combustion engine 14 to load(s) 16.

When system 124 is operated, such accessories (i.e., load(s) 16) may be also be driven by system 124 via AGB 44. For example, output shaft 40 of turbo-expander 38 may be drivingly coupled to a pad/interface of AGB 44 and contribute to driving the accessories (i.e., load(s) 16) that are connected to AGB 44. In other words, output shaft 40 and AGB 44 may define a mechanical connection between turbo-expander 38 and load(s) 16 to transfer work produced by turbo-expander 38 to load(s) 16. In some embodiments, an epicyclic gear train, differential gear train or other suitable type of gear train that may permit load(s) 16 to receive motive power from both output shaft 40 and from tower shaft 46 simultaneously. Such gear train may be incorporated into AGB 44 or be separate from AGB 44.

After the work is extracted from the expanding hydrogen gas 26 by turbo-expander 38, hydrogen gas 26 may then be conveyed from turbo-expander 38 to combustion chamber 18 of combustion engine 14 via conduit 48 (e.g., pipe) so that hydrogen gas 26 may be injected into and burned in combustion chamber 18 and that additional work may be extracted from hydrogen gas 26 by combustion engine 14. Burning hydrogen gas 26 in combustion chamber 18 can provide a sudden boost of power to rapidly accelerate combustion engine 14 during an abrupt maneuver of aircraft 10 being required, or as an afterburner during take-off of aircraft 10 for example.

System 124 may include one or more controllers 50 (referred hereinafter in the singular) to control various operations of system 124 and optionally other operations of power plant 112. For example, controller 50 may be operatively coupled to receive feedback from one or more sensors sensing operating parameters of system 124. Controller 50 may be operatively connected to controllable devices such as valves and electric motors to control various aspects of operation of system 124. For example, controller 50 may be operatively connected to control a pressure output from pump 42, heat delivered to MH 34 by heat exchanger 36 and the operation of turbo-expander 38 for example.

In some embodiments, controller 50 may include or form part of a Full Authority Digital Engine Control (FADEC) which may, for example, include one or more digital computer(s) or other data processors, sometimes referred to as electronic engine controller(s) (EEC) and related accessories that control at least some aspects of performance of power plant 112. Controller 50 may for example be configured to make decisions regarding the control of power plant 112 based on input from a pilot of aircraft 10. As data processors, controller 50 may include one or more microcontrollers or other suitably programmed or programmable logic circuits.

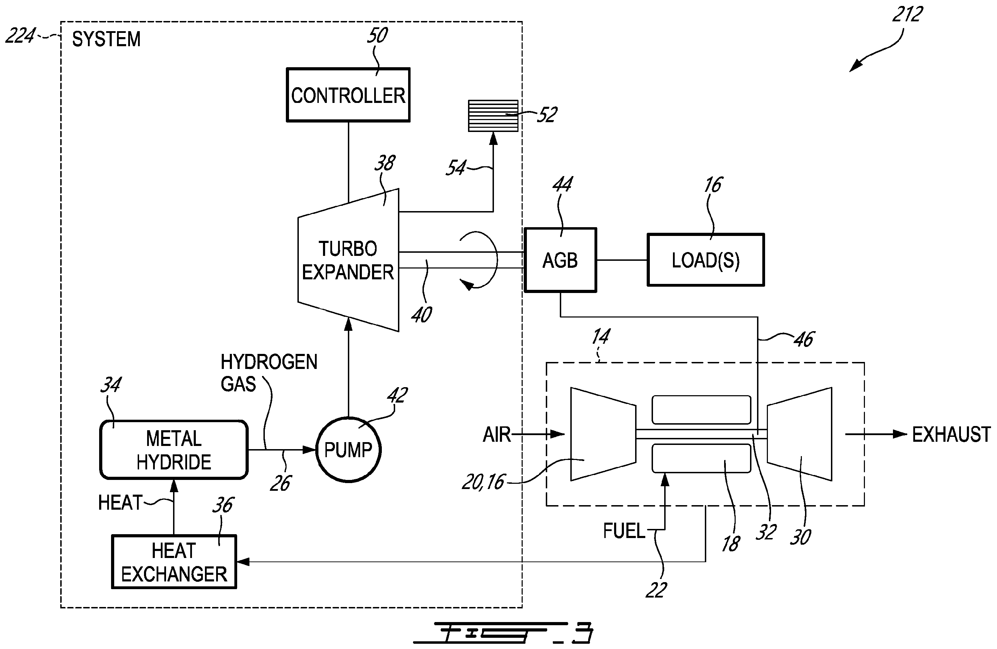

FIG. 3 is a schematic illustration of another exemplary aircraft power plant 212 of aircraft 10. Power plant 212 may include system 224 for producing work from hydrogen gas 26 and using the work to drive load(s) 16 onboard of aircraft 10. Power plant 212 may include components previously described above in relation to power plants 12 and 112. Like elements are identified using like reference numerals. In contrast with power plant 112, power plant 212 may convey hydrogen gas 26 to vent 52 via conduit 54 instead of conveying hydrogen gas 26 to combustion chamber 18 of combustion engine 14. Hydrogen gas 26 may be discharged to the atmosphere via vent 52 downstream of turbo-expander 38. In some situations, venting hydrogen gas 26 to the atmosphere instead of retaining sufficient pressure of hydrogen gas 26 to feed hydrogen gas 26 to combustion chamber 18 may permit a greater depletion of the pressure of hydrogen gas 26 through turbo-expander 38 and thereby allow for a greater amount of work to be produced by turbo-expander 38.

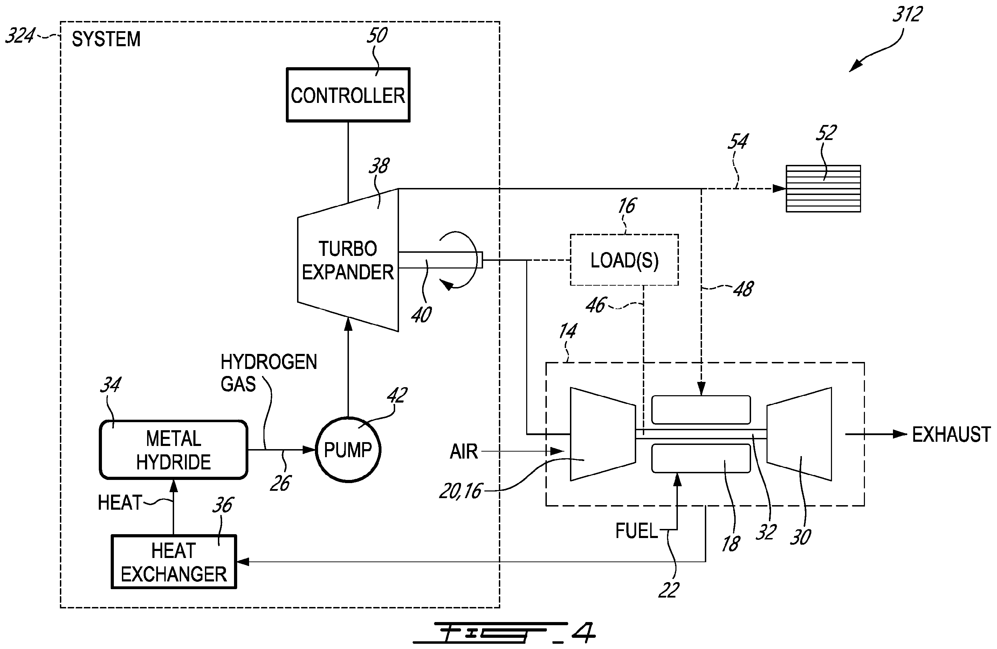

FIG. 4 is a schematic illustration of another exemplary aircraft power plant 312 of aircraft 10. Power plant 312 may include system 324 for producing work from hydrogen gas 26 and using the work to drive load(s) 16 onboard of aircraft 10. Power plant 312 may include components previously described above in relation to power plants 12, 112 and 212. Like elements are identified using like reference numerals. In contrast with power plants 112 and 212, power plant 312 may include a mechanical connection between output shaft 40 of turbo-expander 38 and turbine shaft 32. For example, compressor 20 may be a load 16 driven by work produced by turbo-expander 38 and also by work produced by turbine section 30 of combustion engine 14. In some embodiments, the motive power transferred from turbo-expander 38 to shaft 32 may improve surge and stall margins of compressor 20.

FIG. 4 also shows various possible configurations of power plant 312 shown in broken lines. For example, work produced by turbo-expander 38 may be used to drive compressor 20 and/or other load(s) 16. Compressor 20 may also be driven by turbine section 30 via turbine shaft 32. The other load(s) 16 may be drivingly coupled to turbine shaft 32 via tower shaft 46. In some embodiments, hydrogen gas 26 may be conveyed to combustion chamber 18 via conduit 48 and burned in combustion chamber 18 to extract additional work from hydrogen gas 26. Alternatively, or in addition, hydrogen gas 26 may be conveyed to vent 52 via conduit 54 and discharged into the atmosphere.

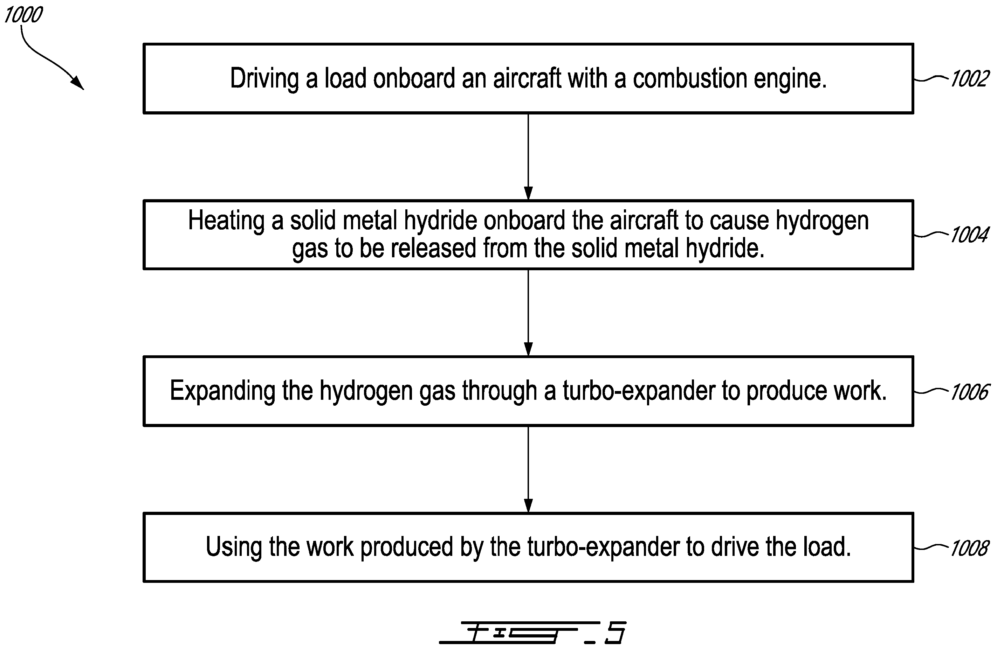

FIG. 5 is a flow diagram of a method 1000 of operating an aircraft power plant. Method 1000 may be performed using power plants 12, 112, 212 or 312 described herein or using another power plant. Method 1000 may include other actions including actions disclosed herein. Method 1000 may include elements of power plants 12, 112, 212 or 312 described herein. In various embodiments, method 1000 may include:
driving load(s) 16 onboard aircraft 10 with combustion engine 14 (block 1002);
heating solid MH 34 onboard aircraft 10 to cause hydrogen gas 26 to be released from MH 34 (block 1004);
expanding hydrogen gas 26 through turbo-expander 38 to produce work (block 1006); and
using the work produced by turbo-expander 38 to drive load(s) 16 (block 1008).

In some embodiments, method 1000 may include compressing hydrogen gas 26 released from MH 34 (e.g., using pump 42) before expanding hydrogen gas 26 through the turbo-expander 38.

In some embodiments of method 1000, driving load(s) 16 with combustion engine 14 may include burning a (e.g., carbon-based) fuel other than hydrogen gas 26 in combustion chamber 18 of combustion engine 14.

In some embodiments, method 1000 may include, after expanding hydrogen gas 26 through turbo-expander 38, burning hydrogen gas 26 in combustion chamber 18 of combustion engine 14. In some embodiments, method 1000 may alternatively or in addition, include after expanding hydrogen gas 26 through turbo-expander 38, release some or all of hydrogen gas 26 into the atmosphere (e.g., via vent 52).

In some embodiments of method 1000, combustion engine 14 may include a gas turbine engine including compressor 20. Load(s) 16 driven by turbo-expander 38 may include compressor 20 drivingly coupled to turbo-expander 38.

In some embodiments of method 1000, driving load(s) 16 with combustion engine 14 may include burning a fuel other than hydrogen gas 26 in combustion chamber 18 of the gas turbine engine. After expanding hydrogen gas 26 through turbo-expander 38, burning hydrogen gas 26 in combustion chamber 18 of the gas turbine engine.

In various embodiments of method 1000, load(s) 16 may include an electric generator, a pump, compressor 20, and/or other mechanically-driven device associated with a system of aircraft 10. In some embodiments, method 1000 may include transferring the work produced by turbo-expander 38 to load(s) 16 via AGB 44 drivingly coupled to combustion engine 14.

In some embodiments of method 1000, heating MH 34 may include transferring heat from (e.g., generated by) combustion engine 14 to MH 34.

The embodiments described in this document provide non-limiting examples of possible implementations of the present technology. Upon review of the present disclosure, a person of ordinary skill in the art will recognize that changes may be made to the embodiments described herein without departing from the scope of the present invention as disclosed in the appended claims.

## Claims

1. A method of operating an aircraft power plant (112; 212; 312), the method comprising:
driving a load (16) onboard an aircraft (10) with a combustion engine (14);
heating a solid metal hydride (34) onboard the aircraft (10) to cause hydrogen gas (26) to be released from the solid metal hydride (34);
expanding the hydrogen gas (26) through a turbo-expander (38) to produce work; and
using the work produced by the turbo-expander (38) to drive the load (16).

2. The method as defined in claim 1, comprising compressing the hydrogen gas (26) released from the solid metal hydride (34) before expanding the hydrogen gas (26) through the turbo-expander (38).

3. The method as defined in claim 1 or 2, wherein driving the load (16) with the combustion engine (14) includes burning a fuel (22) other than the hydrogen gas (26) in a combustion chamber (18) of the combustion engine (14).

4. The method as defined in claim 3, comprising, after expanding the hydrogen gas (26) through the turbo-expander (38), burning the hydrogen gas (26) in the combustion chamber (18) of the combustion engine (14).

5. The method as defined in any of claims 1 to 3, comprising, after expanding the hydrogen gas (26) through the turbo-expander (38), releasing the hydrogen gas (26) into the atmosphere.

6. The method as defined in any preceding claim, wherein:
the combustion engine (14) includes a gas turbine engine including a compressor (20); and
the load (16) includes the compressor (20) drivingly coupled to the turbo-expander (38).

7. The method as defined in claim 6, wherein:
driving the load (16) with the combustion engine (14) includes burning a fuel (22) other than the hydrogen gas (26) in a combustion chamber (18) of the gas turbine engine; and
after expanding the hydrogen gas (26) through the turbo-expander (38), burning the hydrogen gas (26) in the combustion chamber (18) of the gas turbine engine.

8. The method as defined in any preceding claim, wherein the load (16) includes an electric generator.

9. The method as defined in any preceding claim, comprising transferring the work produced by the turbo-expander (38) to the load (16) via an accessory gearbox (44) drivingly coupled to the combustion engine (14).

10. The method as defined in any preceding claim, comprising transferring heat from the combustion engine (14) to the solid metal hydride (34).

11. A system (24; 124; 224; 324) for driving a load (16) onboard an aircraft (10), the system comprising:
a solid metal hydride (34);
a source of heat in thermal communication with the solid metal hydride (34) to cause hydrogen gas (26) to be released from the solid metal hydride (34);
a turbo-expander (38) in fluid communication with the solid metal hydride (34) to produce work from the hydrogen gas (26) released from the solid metal hydride (34) expanding through the turbo-expander (38);
a first mechanical connection (40) transferring the work produced by the turbo-expander (38) to the load (16); and
a second mechanical connection (32, 46) transferring work produced by a combustion engine (14) to the load (16).

12. The system (24; ...; 324) as defined in claim 11, comprising a pump (42) operatively disposed between the solid metal hydride (34) and the turbo-expander (38) to pressurize the hydrogen gas (26) released from the solid metal hydride (34) upstream of the turbo-expander (38).

13. The system (24; 124; 324) as defined in claim 11 or 12, comprising a conduit (48) conveying the hydrogen gas (26) from the turbo-expander (38) to a combustion chamber (18) of the combustion engine (14).

14. The system (24; 224; 324) as defined in any of claims 11 to 13, comprising a conduit (54) conveying the hydrogen gas (26) from the turbo-expander (38) to the atmosphere.

15. An aircraft power plant (112; 212; 312) comprising the system (24; 124; 224; 324) as defined in any of claims 11 to 14.

## Patentansprüche

1. Verfahren zum Betreiben eines Flugzeugkraftwerks (112; 212; 312), wobei das Verfahren Folgendes umfasst:
Antreiben eines Verbrauchers (16) an Bord eines Flugzeugs (10) mit einem Verbrennungsmotor (14);
Erhitzen eines festen Metallhydrids (34) an Bord des Flugzeugs (10), um zu bewirken, dass Wasserstoffgas (26) aus dem festen Metallhydrid (34) freigesetzt wird;
Expandieren des Wasserstoffgases (26) durch einen Turboexpander (38), um Leistung zu erzeugen; und
Verwenden der durch den Turboexpander (38) erzeugten Leistung, um den Verbraucher (16) anzutreiben.

2. Verfahren nach Anspruch 1, umfassend Komprimieren des aus dem festen Metallhydrid (34) freigesetzten Wasserstoffgases (26) vor dem Expandieren des Wasserstoffgases (26) durch den Turboexpander (38).

3. Verfahren nach Anspruch 1 oder 2, wobei das Antreiben des Verbrauchers (16) mit dem Verbrennungsmotor (14) Verbrennen eines anderen Brennstoffs (22) als das Wasserstoffgas (26) in einer Brennkammer (18) des Verbrennungsmotors (14) beinhaltet.

4. Verfahren nach Anspruch 3, umfassend Verbrennen des Wasserstoffgases (26) in der Brennkammer (18) des Verbrennungsmotors (14) nach dem Expandieren des Wasserstoffgases (26) durch den Turboexpander (38).

5. Verfahren nach einem der Ansprüche 1 bis 3, umfassend Freisetzen des Wasserstoffgases (26) in die Atmosphäre nach dem Expandieren des Wasserstoffgases (26) durch den Turboexpander (38).

6. Verfahren nach einem der vorhergehenden Ansprüche, wobei:
der Verbrennungsmotor (14) einen Gasturbinenmotor beinhaltet, der einen Verdichter (20) beinhaltet; und
der Verbraucher (16) den Verdichter (20) beinhaltet, der antriebsmäßig an den Turboexpander (38) gekoppelt ist.

7. Verfahren nach Anspruch 6, wobei:
das Antreiben des Verbrauchers (16) mit dem Verbrennungsmotor (14) Verbrennen eines anderen Brennstoffs (22) als das Wasserstoffgas (26) in einer Brennkammer (18) des Gasturbinenmotors beinhaltet; und
Verbrennen des Wasserstoffgases (26) in der Brennkammer (18) des Gasturbinenmotors nach dem Expandieren des Wasserstoffgases (26) durch den Turboexpander (38).

8. Verfahren nach einem der vorhergehenden Ansprüche, wobei der Verbraucher (16) einen elektrischen Generator beinhaltet.

9. Verfahren nach einem der vorhergehenden Ansprüche, umfassend Übertragen der durch den Turboexpander (38) erzeugten Leistung auf den Verbraucher (16) über ein antriebsmäßig an den Verbrennungsmotor (14) gekoppeltes Nebengetriebe (44).

10. Verfahren nach einem der vorhergehenden Ansprüche, umfassend Übertragen von Wärme von dem Verbrennungsmotor (14) auf das feste Metallhydrid (34).

11. System (24; 124; 224; 324) zum Antreiben eines Verbrauchers (16) an Bord eines Flugzeugs (10), wobei das System Folgendes umfasst:
ein festes Metallhydrid (34);
eine Wärmequelle in thermischer Verbindung mit dem festen Metallhydrid (34), um zu bewirken, dass Wasserstoffgas (26) aus dem festen Metallhydrid (34) freigesetzt wird;
einen Turboexpander (38) in Fluidverbindung mit dem festen Metallhydrid (34), um Leistung aus dem aus dem festen Metallhydrid (34) freigesetzten Wasserstoffgas (26), das durch den Turboexpander (38) expandiert wird, zu erzeugen;
eine erste mechanische Verbindung (40), welche die durch den Turboexpander (38) erzeugte Leistung auf den Verbraucher (16) überträgt; und
eine zweite mechanische Verbindung (32, 46), welche die durch einen Verbrennungsmotor (14) erzeugte Leistung auf den Verbraucher (16) überträgt.

12. System (24; ...; 324) nach Anspruch 11, umfassend eine Pumpe (42), die betriebsmäßig zwischen dem festen Metallhydrid (34) und dem Turboexpander (38) angeordnet ist, um das aus dem festen Metallhydrid (34) freigesetzte Wasserstoffgas (26) stromaufwärts des Turboexpanders (38) unter Druck zu setzen.

13. System (24; 124; 324) nach Anspruch 11 oder 12, umfassend eine Leitung (48), die das Wasserstoffgas (26) von dem Turboexpander (38) zu einer Brennkammer (18) des Verbrennungsmotors (14) befördert.

14. System (24; 224; 324) nach einem der Ansprüche 11 bis 13, umfassend eine Leitung (54), die das Wasserstoffgas (26) von dem Turboexpander (38) in die Atmosphäre befördert.

15. Flugzeugkraftwerk (112; 212; 312), umfassend das System (24; 124; 224; 324) nach einem der Ansprüche 11 bis 14.

## Revendications

1. Procédé de fonctionnement d'un moteur (112 ; 212 ; 312) de puissance d'aéronef, le procédé comprenant :
l'entraînement d'une charge (16) à bord d'un aéronef (10) avec un moteur (14) à combustion ;
le chauffage d'un hydrure (34) métallique solide à bord de l'aéronef (10) pour amener la libération de gaz (26) hydrogène à partir de l'hydrure (34) métallique solide ;
l'expansion du gaz (26) hydrogène à travers un turbo-détendeur (38) pour produire du travail ; et
l'utilisation du travail produit par le turbo-détendeur (38) pour entraîner la charge (16).

2. Procédé selon la revendication 1, comprenant la compression du gaz (26) hydrogène libéré à partir de l'hydrure (34) métallique solide avant l'expansion du gaz (26) hydrogène à travers le turbo-détendeur (38).

3. Procédé selon la revendication 1 ou 2, dans lequel l'entraînement de la charge (16) avec le moteur (14) à combustion comporte la combustion d'un combustible (22) autre que le gaz (26) hydrogène dans une chambre (18) de combustion du moteur (14) à combustion.

4. Procédé selon la revendication 3, comprenant, après l'expansion du gaz (26) hydrogène à travers le turbo-détendeur (38), la combustion du gaz (26) hydrogène dans la chambre (18) de combustion du moteur (14) à combustion.

5. Procédé selon l'une quelconque des revendications 1 à 3, comprenant, après l'expansion du gaz (26) hydrogène à travers le turbo-détendeur (38), la libération du gaz (26) hydrogène dans l'atmosphère.

6. Procédé selon une quelconque revendication précédente, dans lequel :
le moteur (14) à combustion comporte un moteur à turbine à gaz comportant un compresseur (20) ; et
la charge (16) comporte le compresseur (20) couplé en entraînement au turbo-détendeur (38).

7. Procédé selon la revendication 6, dans lequel :
l'entraînement de la charge (16) avec le moteur (14) à combustion comporte la combustion d'un combustible (22) autre que le gaz (26) hydrogène dans une chambre (18) de combustion du moteur à turbine à gaz ; et
après l'expansion du gaz (26) hydrogène à travers le turbo-détendeur (38), la combustion du gaz (26) hydrogène dans la chambre (18) de combustion du moteur à turbine à gaz.

8. Procédé selon une quelconque revendication précédente, dans lequel la charge (16) comporte un générateur électrique.

9. Procédé selon une quelconque revendication précédente, comprenant le transfert du travail produit par le turbo-détendeur (38) à la charge (16) via un relais (44) d'accessoires couplé en entraînement au moteur (14) à combustion.

10. Procédé selon une quelconque revendication précédente, comprenant le transfert de chaleur du moteur (14) à combustion à l'hydrure (34) métallique solide.

11. Système (24 ; 124 ; 224 ; 324) pour l'entraînement d'une charge (16) à bord d'un aéronef (10), le système comprenant :
un hydrure (34) métallique solide ;
une source de chaleur en communication thermique avec l'hydrure (34) métallique solide pour amener la libération de gaz (26) hydrogène à partir de l'hydrure (34) métallique solide ;
un turbo-détendeur (38) en communication fluidique avec l'hydrure (34) métallique solide pour produire du travail à partir du gaz (26) hydrogène libéré à partir de l'hydrure (34) métallique solide s'étendant à travers le turbo-détendeur (38) ; une première liaison (40) mécanique transférant le travail produit par le turbo-détendeur (38) à la charge (16) ; et
une seconde liaison (32, 46) mécanique transférant le travail produit par un moteur (14) à combustion à la charge (16).

12. Système (24 ; ... ; 324) selon la revendication 11, comprenant une pompe (42) disposée fonctionnellement entre l'hydrure (34) métallique solide et le turbo-détendeur (38) pour pressuriser le gaz (26) hydrogène libéré à partir de l'hydrure (34) métallique solide en amont du turbo-détendeur (38).

13. Système (24 ; 124 ; 324) selon la revendication 11 ou 12, comprenant un conduit (48) transportant le gaz (26) hydrogène du turbo-détendeur (38) à une chambre (18) de combustion du moteur (14) à combustion.

14. Système (24 ; 224 ; 324) selon l'une quelconque des revendications 11 à 13, comprenant un conduit (54) transportant le gaz (26) hydrogène du turbo-détendeur (38) à l'atmosphère.

15. Moteur (112 ; 212 ; 312) de puissance d'aéronef comprenant le système (24 ; 124 ; 224 ; 324) selon l'une quelconque des revendications 11 à 14.
